(19) Europäisches Patentamt
European Patent Office
Office européen des brevets

(11) **EP 3 969 820 B1**

(12) **FASCICULE DE BREVET EUROPEEN**

(45) Date de publication et mention
de la délivrance du brevet:
**26.07.2023 Bulletin 2023/30**

(21) Numéro de dépôt: **20726817.8**

(22) Date de dépôt: **18.05.2020**

(51) Classification Internationale des Brevets (IPC):
**F24F 3/044** *(2006.01)*    **F24F 11/00** *(2018.01)*
**F24F 11/54** *(2018.01)*    **F24F 11/56** *(2018.01)*
**F24F 11/72** *(2018.01)*    **F24F 13/02** *(2006.01)*
**F24F 110/10** *(2018.01)*    **F24F 110/12** *(2018.01)*
**F24F 120/10** *(2018.01)*

(52) Classification Coopérative des Brevets (CPC):
**F24F 3/044; F24F 11/0001; F24F 11/54;**
**F24F 11/56; F24F 11/72; F24F 13/0236;**
F24F 2110/10; F24F 2110/12; F24F 2120/10;
Y02B 30/70

(86) Numéro de dépôt international:
**PCT/EP2020/063861**

(87) Numéro de publication internationale:
**WO 2020/234254 (26.11.2020 Gazette 2020/48)**

(54) **PROCÉDÉ ET INSTALLATION DE RÉGULATION THERMIQUE CHAUD ET/OU FROID MULTIZONE D'UN BÂTIMENT VIA UN RÉSEAU AÉRAULIQUE**

VERFAHREN UND ANLAGE ZUR HEISSEN UND/ODER KALTEN THERMISCHEN MULTIZONENREGELUNG EINES GEBÄUDES ÜBER EIN LUFTNETZ

METHOD AND INSTALLATION FOR THE MULTIZONAL HOT AND/OR COLD THERMAL REGULATION OF A BUILDING VIA AN AIR NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2019 FR 1905188**

(43) Date de publication de la demande:
**23.03.2022 Bulletin 2022/12**

(73) Titulaire: **Baillindustrie**
**66600 Rivesaltes (FR)**

(72) Inventeur: **BAILLOEUIL, Alain**
**66000 Perpignan (FR)**

(74) Mandataire: **Rhein, Alain**
**Cabinet BREV & SUD**
**55 Avenue Clément Ader**
**34170 Castelnau-le-Lez (FR)**

(56) Documents cités:
| | |
|---|---|
| WO-A1-03/076849 | AU-A1- 2002 301 200 |
| FR-A1- 2 839 143 | US-A1- 2018 363 933 |

**EP 3 969 820 B1**

**EP 3 969 820 B1**

**Description**

[La présente invention entre dans le domaine de l'aéraulique appliquée notamment au domaine du bâtiment. Plus précisément, l'invention s'inscrit dans le champ de la régulation thermique d'un bâtiment.

De manière générale, la gestion thermique d'un bâtiment implique, d'une part, un apport d'air à une température de consigne déterminée, et d'autre part, un système d'extraction d'air afin de renouveler l'air du bâtiment.

Afin de gérer ces deux aspects une solution technique utilisée consiste en un système de gestion thermique chaud/froid réversible de type pompe à chaleur. L'air chauffé ou refroidi à une température de consigne déterminée peut être ensuite diffusé dans le bâtiment au travers d'un réseau aéraulique de type gainable.

De manière classique, cette solution technique peut être mise en oeuvre par une installation de régulation thermique qui comprend un groupe extérieur et un groupe intérieur qui sont adaptés à produire de l'air, chaud ou froid, afin d'atteindre une température de consigne fixée par un thermostat. En particulier, le groupe extérieur comprend un compresseur associé à une batterie d'échangeurs thermiques configurés pour créer du froid et/ou du chaud. Le groupe extérieur est par ailleurs relié au groupe intérieur qui comporte également une batterie d'échangeurs thermiques sur laquelle souffle un ventilateur générant ainsi de l'air chaud et/ou de l'air froid. Le froid est généré en évaporant un fluide frigorigène au contact de la batterie d'échangeurs thermiques du groupe intérieur. A l'inverse, le chaud est généré en condensant le gaz frigorigène également au contact de la batterie d'échangeurs thermiques du groupe intérieur.

Le groupe extérieur et le groupe intérieur forment une unité de production d'air chaud/froid qui est encore appelée « split ». L'unité de production d'air est pilotée par une unité de contrôle qui est reliée à des thermostats disposés dans chaque pièce d'un bâtiment.

Selon une configuration d'installation de régulation thermique, le groupe extérieur est connecté à un groupe intérieur associé à un plénum de distribution d'air qui réparti l'air insufflé par le groupe intérieur à chaque pièce régulée. Selon cette configuration, le plénum comporte des conduits aérauliques qui s'étendent respectivement vers chaque pièce régulée.

Selon cette configuration, l'installation de régulation thermique comprend un réseau aéraulique de reprise d'air afin de maintenir un équilibre de pression avec l'intérieur du bâtiment mais aussi de faciliter le renouvellement de l'air dans les pièces régulées.

Il existe au moins deux types de procédé de régulation thermique chaud/froid d'une telle installation.

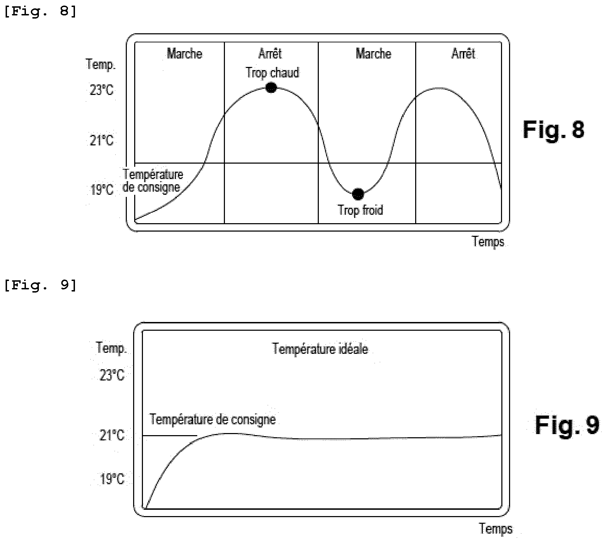

Le fonctionnement d'un premier type de régulation thermique dite « TOR », c'est-à-dire, tout ou rien, est illustré à la figure 8. Le fonctionnement de ce type de régulation peut être résumé de la manière suivante : suite à l'application d'une température de consigne et lorsque le thermostat détecte une température inférieure à la température de consigne, l'unité de production d'air démarre à pleine puissance. Par la suite, lorsque le thermostat mesure une température supérieure à la température de consigne, l'unité de production d'air est arrêtée. De manière cyclique, lorsque la température mesurée par le thermostat est inférieure à la température de consigne, l'unité de production d'air redémarre à pleine puissance etc.

Bien que peu onéreux, ce type de régulation thermique présente notamment l'inconvénient d'être imprécise, d'engendrer une sollicitation trop importante de l'unité de production d'air au démarrage et ne permet pas de garantir un confort thermique à l'utilisateur. De surcroît, une régulation thermique de type « TOR » implique une consommation d'énergie importante et une usure rapide de l'unité de production d'air due à ce mode de sollicitation de type « TOR ».

Un second type de procédé de régulation thermique est dénommé « PID » ou proportionnelle intégrale dérivé ou encore procédé de régulation modulante. Le fonctionnement du procédé de régulation modulante est illustré à la figure 9. A l'inverse du fonctionnement du procédé régulation de type « TOR », l'unité de production d'air est sollicitée proportionnellement à l'écart entre la température de consigne et la température mesurée.

Plus onéreux que le procédé de régulation de type « TOR », le procédé de régulation modulante présente l'avantage de fournir une régulation précise et de conférer un confort thermique à l'utilisateur. Autre avantage, le procédé de régulation modulante prolonge la durée de vie de l'unité de production d'air au travers d'une sollicitation plus douce qui réduit également la consommation énergétique du système.

Le document AU 2002 301 200 A1 divulgue un système de distribution d'air pour une installation de climatisation, le système comprenant: un ensemble de distribution pour distribuer un flux d'air d'alimentation d'un climatiseur à une pluralité de zones; un registre de zone pour chaque zone afin de contrôler le débit d'air d'alimentation vers ladite zone; un moyen de mesure de la température de zone pour chaque zone afin de mesurer la température de la zone; un moyen de détermination du point de consigne pour établir un point de consigne de température pour chaque zone; un système de contrôle global en communication avec les moyens de mesure de la température de zone, les registres de zone et l'unité de climatisation, dans lequel le système de contrôle global contrôle chaque registre de zone afin de minimiser l'écart entre chaque point de consigne de température respectif et la température de zone mesurée et contrôle l'unité de climatisation pour satisfaire aux exigences de température de l'air d'alimentation et/ou de débit d'air cumulatif des zones.

Dans ce contexte, la présente invention cherche à fournir une solution technique afin de permettre une régulation thermique indépendante multizone d'un même bâtiment, c'est-à-dire, une régulation thermique indépendante pour chaque pièce régulée.

A cet effet, un premier aspect de la présente invention se rapporte à un procédé de régulation thermique chaud et/ou froid multizone d'un bâtiment, comportant :

a) une étape d'application d'une température de consigne $T_c$ définie dans une ou plusieurs pièce(s) régulée(s) thermiquement indépendante(s) du bâtiment ;

b) une étape de calcul d'un différentiel $\Delta T_m$ de chaque pièce régulée, qui correspond à la différence entre la température de consigne $T_c$ et une température $T_m$ mesurée à un instant t ;

c) une étape de détermination d'un besoin calorifique $C_t$ du bâtiment du bâtiment à un instant t, le besoin calorifique $C_t$ du bâtiment étant déterminé en fonction du différentiel $\Delta T_m$ de chaque pièce régulée ;

d) une étape d'ajustement du taux de sollicitation d'une unité de production d'air au moins en fonction du besoin calorifique du bâtiment $C_t$, de la température extérieure au bâtiment, et de la puissance de fonctionnement maximale de l'unité de production d'air, l'unité de production d'air étant configurée pour produire et diffuser de l'air conditionné chaud et/ou de l'air conditionné froid à une température déterminée et selon un débit défini en fonction du besoin calorifique du bâtiment $C_t$ ;

e) une étape de diffusion d'air conditionné selon la température déterminée et le débit défini en fonction du besoin calorifique du bâtiment C, l'air conditionné étant diffusé dans un réseau de diffusion qui alimente indépendamment chaque pièce régulée du bâtiment ; et

f) une étape de régulation thermique de chaque pièce régulée par la répétition à intervalle régulier des étapes b), c), d) et e), le taux de sollicitation de l'unité de production d'air étant ajusté en fonction de l'évolution du besoin calorifique C du bâtiment.

Avantageusement, le procédé de régulation selon l'invention permet de réguler thermiquement de manière indépendante plusieurs pièces d'un même bâtiment, tout en optimisant la consommation énergétique de l'unité de production d'air en globalisant le besoin calorifique $C_t$ du bâtiment.

Selon une première variante de l'invention, l'étape de détermination d'un besoin calorifique $C_t$ du bâtiment correspond à une sélection d'un différentiel maximal $\Delta T_{mMax}$ parmi les différentiels $\Delta T_m$ de chaque pièce régulée du bâtiment.

Selon une deuxième variante de l'invention, dans l'étape c), le besoin calorifique $C_t$ du bâtiment correspond à une moyenne des différentiels $\Delta T_m$ de chaque pièce régulée du bâtiment.

Selon une troisième variante de l'invention, l'étape de détermination d'un besoin calorifique $C_t$ du bâtiment correspond à une somme des besoins calorifiques $c_t$ à un instant t de chaque pièce régulée, le besoin calorifique $c_t$ d'une pièce régulée étant défini proportionnellement au différentiel $\Delta T_m$ de ladite pièce régulée. Selon cette variante, la température de chaque pièce régulée est gérée indépendamment des autres selon une fonction proportionnelle intégrale dérivée. Cette caractéristique permet d'augmenter le confort thermique de chaque pièce régulée, tout en sollicitant plus finement l'unité de production d'air.

En particulier, l'air conditionné chaud et/ou l'air conditionné froid est diffusé dans chaque pièce régulée de manière proportionnelle par rapport au besoin calorifique et respectif de chaque de pièce régulée. Dans cette optique, une pièce régulée est alimentée en air spécifiquement par un piquage de diffusion d'air, le besoin calorifique et correspondant à un degré d'ouverture ou un temps d'ouverture du piquage de diffusion d'air d'une pièce régulée, le degré ou le temps d'ouverture du piquage de diffusion étant en fonction du différentiel $\Delta T_m$ de cette pièce régulée.

Selon une caractéristique préférentielle du premier aspect de l'invention, lorsque la température de consigne $T_c$ est atteinte pour une ou plusieurs pièce(s) régulée(s) déterminée(s), le procédé de régulation thermique comporte une étape de déconnexion temporaire du réseau de diffusion de chaque pièce régulée du bâtiment ayant atteint sa température de consigne $T_c$, le besoin calorifique du bâtiment $C_t$ étant alors déterminé en excluant chaque pièce régulée ayant atteint sa température de consigne $T_c$.

Cette déconnexion temporaire permet de bénéficier de l'inertie thermique d'une pièce régulée pour réduire la consommation d'énergie de l'unité production d'air.

En outre, le procédé de régulation prévoit que lorsque la température mesurée Tm, d'une pièce régulée qui est déconnectée du réseau de diffusion, diffère à nouveau de sa température de consigne $T_c$ et que le différentiel de température $\Delta T_m$ est supérieur à un seuil $\Delta T_{Seuil}$ déterminé, la pièce régulée est reconnectée au réseau de diffusion du bâtiment.

En ce sens, le seuil $\Delta T_{Seuil}$ peut être paramétré entre 0,1°C et 1°C, de préférence le seuil $\Delta T_{Seuil}$ est paramétré entre 0,2 °C et 0,5°C. Un seuil $\Delta T_{seuil}$ d'un tel ordre de grandeur permet de conserver chaque pièce régulée autour de la température de consigne $T_c$ en sollicitant peu l'unité de production d'air. Il résulte de ces avantages une réduction de la consommation d'énergie de l'unité de production d'air.

Selon l'invention, l'étape d'ajustement du taux de sollicitation de l'unité de production d'air est aussi fonction de la température extérieure au bâtiment.

Selon une caractéristique préférentielle du premier aspect de l'invention, l'étape d'ajustement du taux de sollicitation de l'unité de production d'air est fonction de la température de reprise d'air par un réseau de reprise d'air du bâtiment.

Selon une caractéristique préférentielle du premier aspect de l'invention, l'étape d'ajustement du taux de sollicitation de l'unité de production d'air est continue.

Selon une caractéristique préférentielle du premier aspect de l'invention, le procédé de régulation comporte une étape de détection de présence dans chaque pièce régulée connectée au ou déconnectée du réseau de diffusion, et lorsqu'une présence est détectée dans une pièce régulée, ladite pièce régulée est connectée au réseau de diffusion et prise en compte besoin calorifique du bâtiment $C_t$. La connexion d'une pièce régulée au réseau de diffusion lorsqu'une présence est détectée dans ladite pièce régulée contribue à éviter de maintenir une température de consigne $T_c$ inutilement pour pièce régulée qui n'est pas utilisée et/ou occupée.

Selon une caractéristique préférentielle du premier aspect de l'invention, le procédé de régulation comporte une étape de détection dans chaque pièce régulée de l'ouverture d'une huisserie, lorsque l'ouverture d'une huisserie est détectée dans une pièce régulée, la régulation thermique de ladite pièce régulée est stoppée jusqu'à la fermeture de l'huisserie. La détection d'ouverture d'une huisserie contribue à éviter de solliciter indument l'unité de production d'air lorsqu'une huisserie est ouverte.

Selon une caractéristique préférentielle du premier aspect de l'invention, l'étape d'application d'une température de consigne Tc pour chaque pièce régulée est effectuée via un thermostat présent dans chaque pièce régulée et/ou un terminal distant commandant au travers d'un réseau de télécommunication la température de consigne Tc de chaque pièce régulée.

Selon une caractéristique préférentielle du premier aspect de l'invention, le procédé comprend une commande d'ouverture/fermeture automatique d'ouvrants et/ou de stores en fonction des apports thermiques extérieurs.

Un second aspect de l'invention concerne une installation de régulation thermique d'un bâtiment pour la mise en oeuvre d'un procédé de régulation thermique selon le premier aspect de l'invention, l'installation de régulation comprenant une ou plusieurs pièce(s) à réguler, l'installation de régulation comprend :

- un thermostat qui est installé dans chaque pièce régulée, le thermostat comporte au moins un capteur de température et des moyens de gestion de la température de la pièce régulée ;
- au moins une unité de production d'air équipée d'un compresseur et d'un ventilateur configurés pour produire et diffuser de l'air conditionné chaud et/ou de l'air conditionné froid à une température déterminée et un débit défini ;
- un réseau de diffusion d'air qui est alimenté par l'unité de production d'air et un réseau de reprise d'air favorisant le renouvellement de l'air dans chaque pièce régulée du bâtiment ;
- au moins un capteur de température disposé sur le pourtour extérieur du bâtiment;
- au moins un plénum de distribution d'air qui est intégré au réseau de diffusion, le plénum de distribution d'air, d'une part, est relié à chaque pièce régulée au travers d'au moins un conduit de diffusion, et d'autre part, le plénum de distribution comporte des moyens de gestion de la diffusion indépendante de l'air conditionné dans chaque conduit de diffusion ; et
- une unité de contrôle de l'installation de régulation qui est reliée à chaque thermostat, au(x) capteur(s) de température disposé(s) sur le pourtour extérieur du bâtiment, à l'unité de production d'air et aux moyens de gestion du plenum de distribution, l'unité de contrôle permet d'ajuster le fonctionnement de l'unité de production d'air et de gérer indépendamment la température de chaque pièce régulée selon le procédé du premier aspect de l'invention.

Selon une variante du second aspect de l'invention, l'installation de régulation thermique comporte un terminal de régulation qui pilote l'unité de contrôle en fonction au moins des données fournies par chaque thermostat. De préférence, l'installation de régulation comporte également un module de traduction des protocoles de fonctionnement entre l'unité de contrôle de l'installation et le terminal de régulation.

D'autres particularités et avantages apparaitront dans la description détaillée, qui suit, d'un exemple de réalisation, non limitatif, illustré par les figures 1 à 9 placées en annexe et dans lesquelles :

[Fig. 1] la figure 1 est une représentation d'un bâtiment domestique multizone, chaque pièce régulée comportant un thermostat ;
[Fig. 2] la figure 2 est une représentation schématique d'une installation de régulation thermique d'un bâtiment conforme à l'invention ;
[Fig. 3] la figure 3 est un diagramme correspond à un procédé de régulation thermique non conforme à l'invention mais utile pour sa compréhension ;
[Fig. 4] la figure 4 est un graphique de comparaison entre le fonctionnement d'une unité de production d'air pilotée par le procédé de régulation de l'invention et le fonctionnement classique d'une unité de production d'air ;

[Fig. 5] la figure 5 est un graphique de comparaison entre la puissance absorbée par une unité de production d'air selon un fonctionnement classique et la puissance absorbée par une unité de production d'air pilotée par le procédé de régulation selon l'invention ;

[Fig. 6] la figure 6 est un graphique représentant le fonctionnement d'une unité de production d'air en fonction du besoin calorifique du bâtiment du bâtiment ;

[Fig. 7] la figure 7 est un graphique illustrant un exemple du taux de sollicitation de l'unité de production d'air en fonction du besoin global thermique d'un bâtiment ;

[Fig. 8] la figure 8 est un graphique représentant le fonctionnement de l'unité de production d'air selon un procédé de régulation thermique de type « TOR » ; et

[Fig. 9] la figure 9 est un graphique représentant le fonctionnement d'une unité de production d'air selon un procédé de régulation thermique de type régulation proportionnelle intégrale dérivée ou PID.

La présente invention concerne un procédé de régulation thermique chaud/froid d'un bâtiment 1. En particulier, le procédé de régulation thermique est configuré pour réguler thermiquement un bâtiment 1 multizone, la température de chaque pièce régulée P1, P2, P3, P4 pouvant être gérée de manière indépendante.

Dans l'objectif de mettre en oeuvre un tel procédé, l'invention se rapporte également à une installation de régulation 2 thermique d'un bâtiment 1.

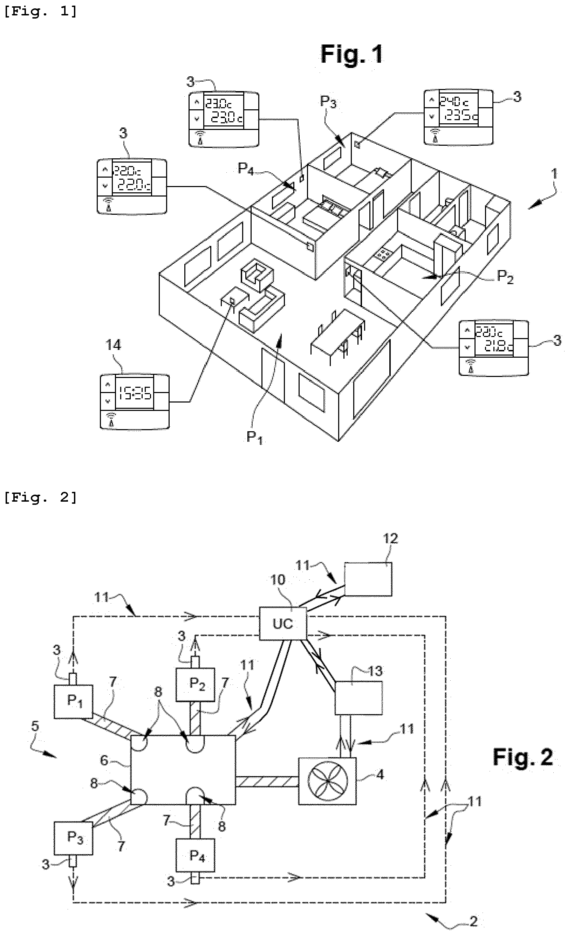

Comme illustré aux figures 1 et 2, l'installation de régulation 2, qui équipe de préférence un bâtiment 1, comprend une ou plusieurs pièce(s) à réguler. Dans le présent exemple, le bâtiment 1 comporte quatre pièces régulées P1, P2, P3, P4.

A cet effet, l'installation de régulation 2 comprend au moins un thermostat 3 qui est installé dans chaque pièce régulée P1, P2, P3, P4. Selon l'invention, le thermostat 3 comporte au moins un capteur de température et des moyens de gestion de la température de la pièce régulée P1, P2, P3, P4. Le thermostat 3 comporte également des moyens de communication à distance au travers d'un réseau de communication filaire ou sans fil. Un réseau local de type wifi, Bluetooth, ou radio peut être utilisé pour réaliser les communications sans fil. Cependant, il est préférable d'utiliser un réseau local utilisant des ondes radios.

L'installation de régulation 2 comprend au moins une unité de production d'air 4 configurée pour produire et diffusé de l'air conditionné chaud et/ou froid. L'unité de production d'air 4 est classiquement composé d'un groupe extérieur et d'un groupe intérieur. Le groupe extérieur comporte un compresseur associé à une batterie d'échangeurs thermiques configurés pour créer du froid et/ou du chaud. Le groupe extérieur est par ailleurs relié au groupe intérieur qui comporte également une batterie d'échangeurs thermiques sur laquelle souffle un ventilateur générant ainsi de l'air chaud et/ou de l'air froid.

L'unité de production d'air 4 génère du froid en évaporant un fluide frigorigène à l'état liquide au contact de la batterie d'échangeurs thermiques du groupe intérieur. A l'inverse, l'unité de production d'air 4 du chaud en condensant le fluide frigorigène à l'état gaz également au contact de la batterie d'échangeurs thermiques du groupe intérieur.

Le ventilateur du groupe intérieur souffle de l'air au contact de la batterie d'échangeurs thermiques où est généré le chaud ou le froid. Au contact de la batterie d'échangeurs thermiques, l'air se refroidit ou se réchauffe avant d'être projeté dans un réseau de diffusion d'air 5 qui est connecté à l'unité de production d'air 4. Ainsi, l'unité de production d'air 4 est configurée pour produire et diffuser de l'air conditionné chaud et/ou de l'air conditionné froid à selon une température déterminée et à un débit défini.

Selon l'invention et l'exemple de la figure 2, le réseau de diffusion d'air 5 intègre au moins un plénum de distribution 6 d'air. Au sein du réseau de diffusion d'air 5, un conduit aéraulique d'arrivé d'air relie l'unité de production d'air 4 au plénum de distribution 6 via un piquage d'arrivée d'air connecté au conduit d'arrivé d'air. En particulier, le groupe intérieur de l'unité de production d'air 4 se situe de préférence au niveau du plénum de distribution 6 auquel le groupe intérieur est directement connecté. L'air chaud ou froid produit est ainsi directement insufflé au niveau du plénum de distribution d'air 6.

Le plénum de distribution 6 d'air est par ailleurs relié à chaque pièce régulée P1, P2, P3, P4 au travers d'au moins un conduit de diffusion 7. Dans ce but, le plénum de distribution 6 comporte au moins un piquage de diffusion 8 d'air. Dans cet exemple, le plénum de distribution 6 comporte quatre piquages de diffusion 8 d'air connectés respectivement à quatre conduits de diffusion 7 d'air.

Dans l'exemple de la figure 2, les conduits de diffusion 7 d'air approvisionnent respectivement une pièce régulée P1, P2, P3, P4. Il convient de noter qu'un plénum de distribution présente un nombre de piquage de diffusion d'air déterminé. En particulier, un plénum de distribution d'air peut présenter jusqu'à douze piquages de diffusion d'air. En conséquence, l'installation de régulation 2 selon l'invention peut à l'aide d'un même plenum réguler jusqu'à douze pièces ou douze zones d'un bâtiment. S'il est nécessaire d'équiper plus de douze zones ou pièces, il est alors possible d'équiper le bâtiment de plusieurs plénums tels que décrits selon l'invention.

Selon l'invention, le plénum de distribution 6 d'air peut comporter des moyens de gestion de la diffusion indépendante de l'air conditionné dans chaque conduit de diffusion 7. Ces moyens de gestion assurent l'ouverture et/ou la fermeture des piquages de diffusion 8 d'air. Ceci permet de choisir vers quelle pièce régulée P1, P2, P3, P4 l'air circulant dans le réseau de diffusion 5 doit être diffusé.

En pratique, les moyens de gestion du plénum de distribution 6 peuvent comprendre un volet actionné par un servomoteur disposé dans la lumière de chaque piquage de diffusion 8. Le volet peut être mobile entre une position ouverte et une position fermée. En position ouverte, le volet laisse l'air passer dans le conduit de diffusion auquel il est connecté. A l'inverse, en position fermé le volet obstrue la lumière du piquage de diffusion 8. Il est ainsi possible de déconnecter temporairement une pièce régulée P1, P2, P3, P4 du réseau de diffusion d'air 5.

Le servomoteur est ainsi capable d'actionner le volet selon deux directions, une direction d'ouverture et une direction de fermeture.

Le volet peut également comporter un capteur de position. Dans ce cas, le volet peut être ouvert selon une position déterminée par rapport à sa position d'ouverture et/ou à sa position de fermeture.

Comme illustré à la figure 2, l'installation de régulation 2 comprend une unité de contrôle 10. L'unité de contrôle 10 peut être formée par un microprocesseur équipé d'une mémoire capable de stocker et d'exécuter des algorithmes.

Dans l'invention et dans cet exemple, l'unité de contrôle 10 est reliée à chaque thermostat 3, à l'unité de production d'air 4 et auxdits moyens de gestion du plénum de distribution 6. Afin de communiquer avec les différents éléments de l'installation de régulation 2, l'unité de contrôle 10 comprend des moyens communication à distance capables de communiquer au travers d'au moins un réseau de communication 11 filaire ou sans fil. De préférence, l'unité de contrôle communique avec les thermostats 3 via un réseau de communication 11 sans fil.

Ainsi, l'unité de contrôle 10 permet d'ajuster le fonctionnement de l'unité de production d'air 4 en fonction des données transmises par chaque thermostat 3. De plus, le pilotage des moyens de gestion du plénum de distribution permet de gérer indépendamment la température de chaque pièce régulée P1, P2, P3, P4.

Dans l'exemple illustré aux figures 1 et 2, l'installation de régulation comporte de préférence un terminal de régulation 12. Le terminal de régulation 12 est configuré pour piloter l'unité contrôle 10. A cet effet, le terminal de régulation 12 est intercalé entre la flotte de thermostats 3 et l'unité de contrôle 10. En particulier, le terminal de régulation 12 communique directement, au travers du réseau de communication 11, avec chaque thermostat 3.

En pratique, le terminal de régulation 12 possède un microprocesseur équipé d'une mémoire, et de moyens de communication adaptés au réseau de communication 11. Ainsi, le terminal de régulation 12 est configuré pour stocker et exécuter des applications numériques, et notamment une application de régulation thermique d'une installation de régulation d'un bâtiment 1. De façon alternative, le terminal de régulation 12 peut être une interface de communication en lien avec un site web stocké sur un serveur distant.

Par ailleurs, dans l'exemple illustré à la figure 2, l'installation de régulation 2 comporte un module de traduction 13 des protocoles de fonctionnement entre l'unité de contrôle 10 et l'unité de production d'air 4. Le module de traduction 13 permet au terminal de régulation 12 de communiquer, au travers de l'unité de contrôle 10, avec l'unité de production d'air 4 et le plénum de distribution 6.

De manière avantageuse, l'installation de régulation 2 peut comporter des moyens de paramétrage de l'unité de contrôle 10. De préférence, les moyens de paramétrage sont formés par une application intégrée à un terminal distant. Les moyens de paramétrage sont capables de communiquer avec l'unité de contrôle 10 au travers d'un réseau de télécommunication 11 filaire ou sans fil. Dans cet exemple, le terminal distant est formé par un boitier nomade 14 permettant de contrôler toutes les pièces régulées P1, P2, P3, P4 du bâtiment 1. En pratique, le boitier nomade 14 correspond à une horloge de programmation de l'installation de régulation 2. Toutefois, l'horloge de programmation peut également être intégrée dans un terminal mobile tel qu'une tablette numérique ou un smartphone.

Par ailleurs, l'installation de régulation 2 comporte également un réseau de reprise d'air favorisant le renouvellement de l'air dans chaque pièce régulée P1, P2, P3, P4 du bâtiment 1. Le réseau de reprise d'air n'est ici pas représenté, toutefois, il consiste en un réseau de conduit aéraulique connectant chaque pièce régulée P1, P2, P3, P4 à l'extérieur du bâtiment 1.

En pratique, chaque pièce régulée P1, P2, P3, P4 peut comprendre une bouche de reprise d'air. Il est également tout à fait possible d'équiper le réseau de reprise d'air d'au moins un ventilateur.

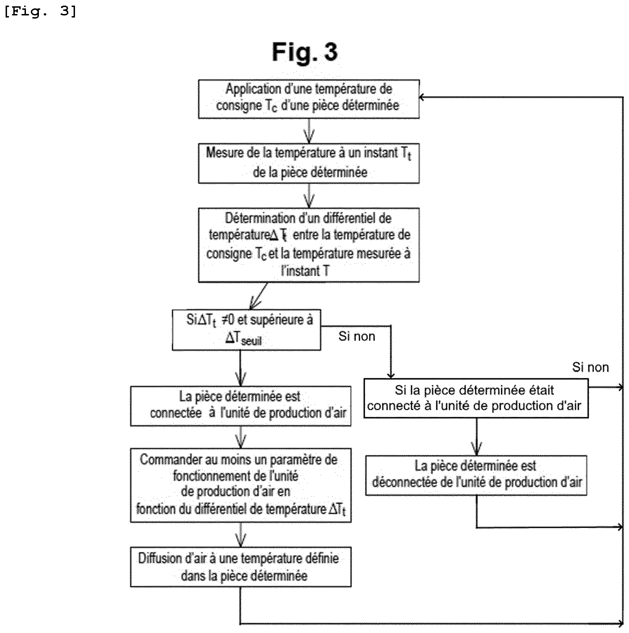

Comme illustré à la figure 3, le procédé de régulation thermique chaud et/ou froid multizone d'un bâtiment 1, comporte une étape d'application (a) d'une température de consigne $T_c$ définie dans une ou plusieurs pièce(s) régulée(s) P1, P2, P3, P4 du bâtiment 1.

Dans cet exemple, le bâtiment 1 possède quatre pièces régulées P1, P2, P3, P4. En particulier, chaque pièce régulée P1, P2, P3, P4 est thermiquement indépendante du bâtiment 1.

L'étape d'application (a) d'une température de consigne $T_c$ pour chaque pièce régulée P1, P2, P3, P4 peut être effectuée via un terminal présent dans chaque pièce régulée P1, P2, P3, P4. La plupart du temps ce terminal correspond au thermostat 3 dédié à la pièce régulée P1, P2, P3, P4.

Toutefois, il est tout à fait possible de commander la température de consigne $T_c$ de chaque pièce régulée P1, P2, P3, P4 via un terminal distant. Le terminal distant communiquant avec le thermostat 3 d'une pièce régulée P1, P2, P3, P4 au travers, d'une part, d'un réseau de communication 11 local et/ou d'un réseau de communication internet/GSM/3G/4G/5G etc, et d'autre part, de l'unité de contrôle 10.

Suite à l'application dans chaque pièce régulée P1, P2, P3, P4 d'une température de consigne $T_c$, une mesure de température $T_m$ est effectuée un instant t. Ainsi, pour chaque pièce régulée P1, P2, P3, P4, à cet instant t, le procédé détermine un différentiel de température $\Delta T_m$ entre la température de consigne $T_c$ et la température mesurée $T_m$. Le différentiel de température $\Delta T_m$ d'une pièce régulée P1, P2, P3, P4 peut être déterminé comme suit :

$$\Delta \mathrm{T}_{mPi} = T_{cPi} - T_{mPi}$$

Avec $P_i$ = P1, P2, P3, P4.

Pour chaque pièce régulée P1, P2, P3, P4, le différentiel de température $\Delta T_m$ peut être déterminé à intervalle régulier. L'intervalle de détermination du différentiel de température $\Delta T_t$ peut être compris entre 60 secondes et 300 secondes.

Dans le cas de l'installation de régulation 2, le calcul du différentiel de température $\Delta T_m$ d'une pièce régulée P1, P2, P3, P4, peut être effectuée par le thermostat 3 de la pièce régulée P1, P2, P3, P4, en question. Toutefois, le calcul du différentiel de température $\Delta T_m$ de chaque pièce régulée P1, P2, P3, P4 peut également être opéré par le terminal de régulation 12.

Le procédé de régulation comprend une étape de détermination (c) d'un besoin calorifique du bâtiment $C_t$ du bâtiment 1 à un instant t.

Le besoin calorifique du bâtiment $C_t$ correspond à l'énergie calorifique qu'il est nécessaire de fournir à un instant t pour assurer la régulation de toutes les pièces régulées P1, P2, P3, P4 en demande. C'est-à-dire, chaque pièce régulée dont le différentiel $\Delta T_m$ est différent de zéro.

L'étape de détermination du besoin calorifique du bâtiment $C_t$ comporte une opération de mesure, à un instant t, de la température Tm dans chaque pièce régulée P1, P2, P3, P4 du bâtiment 1.

L'étape de détermination du besoin calorifique du bâtiment $C_t$ comporte également une opération de détermination des différentiels de température $\Delta T_m$ de chaque pièce régulée P1, P2, P3, P4 du bâtiment 1.

Selon l'invention, le besoin calorifique $C_t$ du bâtiment 1 est déterminé en fonction du différentiel $\Delta T_m$ de chaque pièce régulée P1, P2, P3, P4. Bien entendu, seules les pièces régulées qui sont en demande à un instant t sont prises en compte pour déterminer le besoin calorifique $C_t$ du bâtiment 1.

L'invention comprend une première variante de détermination du besoin calorifique du bâtiment $C_t$. Selon cette variante, le besoin calorifique du bâtiment $C_t$ du bâtiment 1 correspond à une moyenne des différentiels de température $\Delta T_m$ de chaque pièce régulée P1, P2, P3, P4 du bâtiment 1 à un instant t. Dans ce contexte, l'étape de détermination du besoin calorifique du bâtiment $C_t$ comporte également une opération de calcul de la moyenne des différentiels de température $\Delta T_m$ de chaque pièce régulée P1, P2, P3, P4 du bâtiment 1. Le calcul du besoin calorifique $C_t$ du bâtiment 1 peut être exprimé comme suit :

$$C_t = \frac{\sum \Delta \mathrm{T}_{mPi}}{nPi}$$

L'invention comprend une deuxième variante de détermination du besoin calorifique du bâtiment $C_t$. Selon cette deuxième variante, le besoin calorifique du bâtiment $C_t$ correspond à un différentiel maximal $\Delta T_{mMax}$ calculé pour une des pièces régulées P1, P2, P3, P4 du bâtiment 1. Selon cette variante, l'étape de détermination du besoin calorifique du bâtiment $C_t$ comporte une opération de comparaison du différentiel de température $\Delta T_m$ de chaque pièce régulée P1, P2, P3, P4. A la suite de cette comparaison, le différentiel maximal $\Delta T_{mMax}$, c'est-à-dire, le différentiel le plus élevé est sélectionné pour déterminer la valeur du besoin calorifique du bâtiment $C_t$ du bâtiment 1.

Tout comme le calcul du différentiel de température $\Delta T_m$ de chaque pièce régulée P1, P2, P3, P4, le calcul du besoin calorifique du bâtiment $C_t$ est répété périodiquement à intervalle régulier. A titre indicatif, l'intervalle calcul du besoin calorifique du bâtiment B correspond à la synchronicité de communication entre les thermostats 3 et le terminal de régulation. Cette synchronicité peut être opérée en continue ou selon un intervalle de temps compris entre 10 secondes et 120 secondes, de préférence l'intervalle est compris entre 30 secondes et 60 secondes.

Selon l'invention, le calcul du besoin calorifique du bâtiment B est opéré par le terminal de régulation 12 en relation le chaque thermostat 3 de chaque pièce P1, P2, P3, P4.

Le procédé de régulation peut comporter une étape de détection dans chaque pièce régulée P1, P2, P3, P4 de l'ouverture d'une huisserie. L'huisserie peut correspondre à une fenêtre ou une porte. Dans le cas d'une porte, celle-ci peut donner sur l'extérieur du bâtiment 1 ou d'une pièce non régulée du bâtiment 1.

L'ouverture d'une huisserie peut être détectée par une variation importante du différentiel de température $\Delta T_m$ par exemple une variation supérieure à 5 °C. De préférence, cette variation de différentiel de température $\Delta T_m$ s'établie selon une plage temporelle restreinte par exemple entre deux intervalles successifs de détermination du différentiel de température $\Delta T_m$, ou selon un calcul d'un nombre n déterminé de différentiels de température $\Delta T_m$ successifs. De préférence, le nombre n déterminé de différentiels de température $\Delta T_m$ successifs est compris entre 2 et 6.

Toutefois, il est également possible de détecter l'ouverture d'une huisserie en équipant l'huisserie d'un capteur d'ouverture et/ou de fermeture. Le capteur d'ouverture et/ou de fermeture peut être formé par un rupteur. Dans ce cas, le capteur d'ouverture et/ou de fermeture est intégré à l'installation de régulation 2. En particulier, le capteur d'ouverture et/ou de fermeture est relié au terminal de régulation 12, au travers du thermostat 3 de ladite pièce régulée P1, P2, P3, P4, ou directement au travers du réseau de communication 11. Bien entendu, si une pièce régulée P1, P2, P3, P4 possède plusieurs huisseries, il est possible d'équiper chacune d'entre elles d'un capteur d'ouverture et/ou de fermeture.

Lorsque l'ouverture d'une huisserie est détectée dans une pièce régulée P1, P2, P3, P4, la régulation thermique de ladite pièce P1, P2, P3, P4 est stoppée jusqu'à la fermeture de l'huisserie. L'arrêt de la régulation se matérialise par une étape de déconnexion temporaire de ladite pièce P1, P2, P3, P4 du réseau de diffusion 5 d'air. En pratique, la déconnexion temporaire de ladite pièce régulée P1, P2, P3, P4, est effectuée en commandant au plenum 6 de fermer le piquage de diffusion d'air 8 correspondant à ladite pièce régulée P1, P2, P3, P4.

Le procédé de régulation peut comprendre une étape de détection de présence d'une personne dans chaque pièce régulée P1, P2, P3, P4. La détection de présence peut être réalisée classiquement par un détecteur de mouvement volumétrique et/ou un capteur infrarouge. Naturellement, le détecteur de présence peut également être intégré à l'installation de régulation 2. A ces fins, au moins un capteur de présence est installé dans chaque pièce régulée P1, P2, P3, P4. Chaque capteur de présence est relié au terminal de régulation 12, au travers du thermostat 3 de ladite pièce régulée P1, P2, P3, P4, ou directement au travers du réseau de communication 11.

Lorsqu'une présence est détectée dans une pièce régulée P1, P2, P3, P4, ladite pièce est connectée au réseau de diffusion 5 et prise en compte besoin calorifique $C_t$ du bâtiment 1. Comme pour la détection de l'ouverture d'une huisserie, le terminal de régulation 12 contrôle la connexion et/ou la déconnexion d'une pièce régulée P1, P2, P3, P4 au réseau de diffusion 5, au travers de la gestion des volets des piquages de diffusion 8 d'air alimentant chaque pièce régulée P1, P2, P3, P4.

La détection de présence et/ou d'ouverture d'une huisserie permet de réduire la consommation d'énergie de l'installation de régulation 2 en déconnectant temporairement, une pièce régulée P1, P2, P3, P4 sans présence et/ou qui comporte huisserie ouverte, du réseau de distribution d'air 5. Ces fonctionnalités permettent également de prolonger la durée de vie de l'unité de production d'air 4.

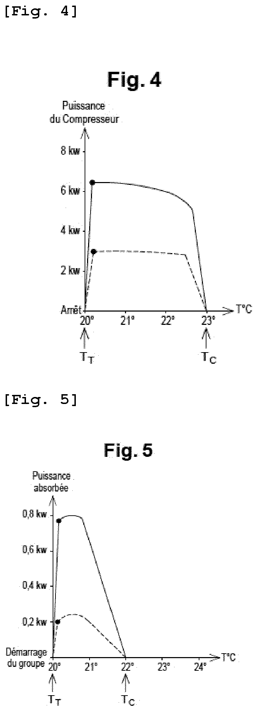

Comme illustré aux figures 4 à 7, le procédé de régulation selon l'invention comprend une étape d'ajustement (d) du taux de sollicitation de l'unité de production d'air 4 au moins en fonction du besoin calorifique $C_t$ du bâtiment 1, de la température extérieure au bâtiment, et de la puissance de fonctionnement maximale de l'unité de production d'air 4.

En effet, l'unité de production d'air 4 est configurée pour produire et diffuser de l'air conditionné chaud et/ou de l'air conditionné froid à une température déterminée.

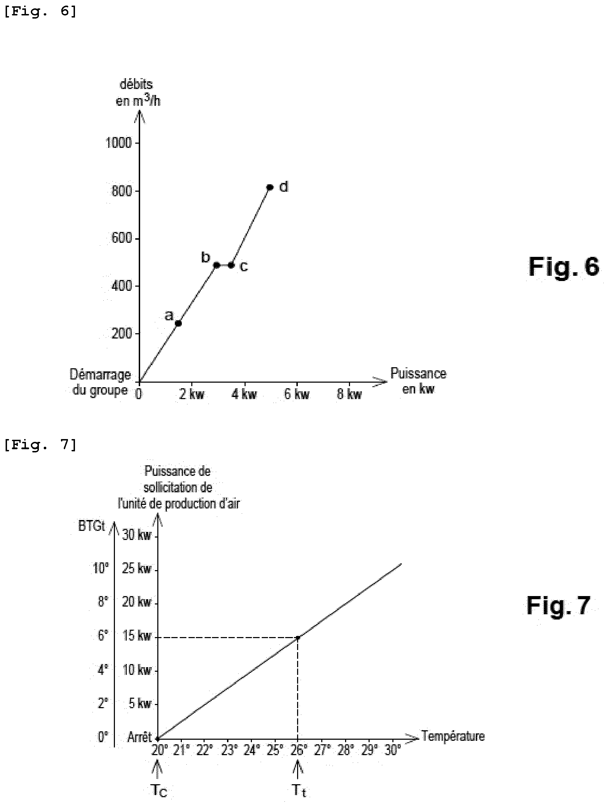

En mode froid, de manière générale une unité de production d'air 4 est configurée pour produire de l'air qui présente une température comprise entre 6°C et 15°C. De la même façon, en mode chaud une unité de production d'air 4 est configuré pour produire de l'air qui présente une température comprise entre 35°C et 45°C. Le procédé de régulation selon l'invention n'influe pas sur la température de diffusion de l'air. En revanche, le procédé de régulation permet de réguler le volume d'air produit à une température déterminée et le débit de diffusion d'air en fonction du besoin calorifique $C_t$ du bâtiment 1 (illustré à la figure 6). Afin de réguler le volume d'air produit, le procédé de régulation ajuste la vitesse de rotation du ventilateur du groupe intérieur de l'unité de production d'air 4. Par voie de faits, le procédé de régulation ajuste également la vitesse de rotation du compresseur du groupe extérieur ceci afin de répondre au besoin de production de chaud ou de froid.

Dans cette optique, l'étape de détermination (c) (b) du besoin calorifique $C_t$ du bâtiment 1 contribue à lisser la demande de chaque thermostat 3 afin de déterminer précisément à quel niveau de puissance de fonctionnement l'unité de production d'air 4 doit être sollicitée.

Le taux de sollicitation de l'unité de production d'air 4 est déterminé notamment en fonction du besoin calorifique $C_t$ du bâtiment 1. Ceci est illustré à la figure 7, afin de simplifier la représentation du taux de sollicitation de l'unité de production d'air 4, la température de consigne $T_c$ et la température mesurée $T_m$ à un instant T sont identiques dans chaque pièce régulée P1, P2, P3, P4 du bâtiment 1.

Dès lors, la température mesurée $T_m$ est de 26°C alors que la température de consigne $T_c$ est de 20°C. Dans ce cas, le besoin calorifique $C_t$ du bâtiment 1 est de -6 °C alors que la puissance de sollicitation de l'unité de production d'air 4 est de 15 kW pour une capacité maximale de 30 kW, soit 50% de sa capacité. Bien entendu, la proportionnalité de ce rapport dépend des capacités de l'unité de production d'air 4. Ainsi, il revient à l'installateur de paramétrer ces données en fonction du matériel qu'il met en place.

De préférence comme illustré à la figure 6, le taux de sollicitation de l'unité de production d'air 4 prend également en compte le nombre de pièces régulées P1, P2, P3, P4 qui sont en demande. C'est-à-dire, du nombre de pièces régulées P1, P2, P3, P4 qui présente un $\Delta T_m$ non nul. Le graphique de la figure 6 illustre cela au travers d'une courbe du débit d'air produit en fonction de la puissance de l'unité de production d'air 4. Lorsqu'une première pièce régulée P1, P2, P3, P4 est en demande, l'unité de production d'air 4 démarre et établie un débit d'air supérieur à 200 m³/h, cela correspond au repère A sur la courbe.

Lorsqu'une deuxième pièce régulée P1, P2, P3, P4 entre en demande, l'unité de production d'air 4 monte en puissance afin de produire un débit d'air supérieur à 400 m³/h. Cela correspond au repère B sur la courbe.

Dans cet exemple, lorsqu'une troisième pièce régulée P1, P2, P3, P4 entre en demande, l'unité de production d'air 4 maintient sa puissance de fonctionnement (repère C, figure 6).

En revanche, lorsqu'une quatrième pièce régulée P1, P2, P3, P4 entre en demande, l'unité de production d'air 4 augmente sa puissance afin de produire un débit d'air supérieur à 800 m³/h (repère D, figure 6).

Selon ce mode de fonction, il est possible de définir, à titre indicatif, plusieurs vitesses de fonctionnement pour une unité de production d'air 4 de capacité de déterminée.

Le graphique de la figure 6 et tableau 1 ci-dessous donnent un exemple pour une unité de production d'air 4 qui présente une capacité nominale de 8 kW.

*Tableau 1*

| Niveau de vitesse | Débit d'air en m³/h | Puissance de sollicitation en kW |
|---|---|---|
| Vitesse 1 | 250 | 1.5 à 2 |
| Vitesse 2 | 500 | 2,5 à 4 |
| Vitesse 3 | 800 | 5 à 6 |

Dans cet exemple, le fonctionnement de l'unité de production d'air 4 est défini selon trois vitesses. Il est à noter que cela peut varier en fonction de la capacité nominale de l'unité de production d'air 4.

De la même manière, le passage d'une vitesse à l'autre peut également être modulé en fonction du volume de chaque pièce régulée P1, P2, P3, P4. En effet, une pièce régulée P1, P2, P3, P4 présentant une surface de 20 m² ne requiert pas le même débit d'air qu'une pièce régulée P1, P2, P3, P4 de 80 m² de surface.

En ce sens, le volume de chaque pièce régulée P1, P2, P3, P4 est paramétrable dans le terminal de régulation 12.

Naturellement, le procédé de régulation comprend une étape de diffusion (e) d'air conditionné selon une température déterminée et à un débit défini en fonction du besoin calorifique $C_t$ du bâtiment 1. L'air conditionné est alors diffusé depuis l'unité de production d'air 4 dans le réseau de diffusion 5 qui alimente indépendamment chaque pièce régulée P1, P2, P3, P4 du bâtiment 1.

Le procédé de régulation comprend en outre une étape de régulation thermique de chaque pièce régulée P1, P2, P3, P4 par la répétition à intervalle régulier des étapes (b), (c) (d) et (e). Cette répétition à intervalle régulier assure l'ajustement du taux de sollicitation de l'unité de production d'air 4 en fonction de l'évolution du besoin calorifique $C_t$ du bâtiment 1.

De préférence, les étapes de détermination d'un besoin calorifique $C_t$ du bâtiment 1(c) d'ajustement du taux de sollicitation d'une unité de production d'air 4 (d) et de diffusion d'air conditionné (e) sont répétées périodiquement selon un intervalle de temps compris entre 30 secondes et 120 secondes, de préférence, l'intervalle de temps est compris entre 45 secondes et 90 secondes et de préférence, l'intervalle de temps est compris entre 50 secondes et 70 secondes.

De manière générale, les courbes représentées aux figures 4 et 5 illustrent le gain énergétique que procure le procédé de régulation selon l'invention et notamment l'ajustement du taux sollicitation en fonction du besoin calorifique $C_t$ du bâtiment 1. Sur ces deux figures, la courbe en pointillé correspond à un groupe extérieur d'une unité de production d'air 4 régulée par un procédé de régulation selon l'invention, et la courbe pleine correspond à un groupe extérieur d'une unité de production d'air régulée de manière classique.

La figure 4 illustre que l'ajustement du taux de sollicitation permet d'atteindre la température de consigne $T_c$ qui est ici de 23 °C en sollicitant moins l'unité de production d'air 4 qu'une régulation classique.

La figure 5 complète la figure 4, elle montre que pour atteindre une même température de consigne $T_c$, la puissance absorbée par une unité de production d'air 4 régulée selon le procédé de l'invention est inférieure à celle d'une unité de production d'air régulée de manière classique. Il est à noter que la puissance absorbée correspond à la puissance d'énergie consommée.

Selon l'invention, l'étape d'ajustement du taux de sollicitation (c) de l'unité de production d'air 4 est également fonction de la température extérieure au bâtiment 1. Dans cette optique, l'installation de régulation 2 comprend un ou plusieurs capteurs de température disposé(s) sur le pourtour extérieur du bâtiment 1. En effet, en cas de chaleur ou de froid extrême à l'extérieur du bâtiment 1, le terminal de régulation 12 demandera à l'unité de production d'air 4 de fonctionner à une puissance supérieure. Ceci permet de parvenir plus rapidement à la température de consigne $T_c$ de chaque pièce régulée P1, P2, P3, P4.

L'étape d'ajustement du taux de sollicitation (d) peut également être effectuée en fonction de la température de reprise d'air par le réseau de reprise d'air du bâtiment 1. A cet effet, l'installation de régulation peut comprendre au moins un capteur de température disposé au niveau de chaque bouche de reprise d'air. Bien entendu, chacun de ces capteurs de température est connecté directement ou indirectement, via un réseau de communication 11, au terminal de régulation 12.

Par ailleurs, un détecteur $CO_2$ et/ou de COV (composés organiques volatils) peut être disposé dans une ou plusieurs pièce(s) régulée(s) P1, P2, P3, P4. Chaque capteur de $CO_2$ et/ou de COV peut être connecté comme décrit précédemment au terminal de régulation 12. Le procédé peut alors réaliser un suivi du taux de $CO_2$ et/ou de COV dans chaque pièce régulée P1, P2, P3, P4 et gérer le taux de sollicitation de l'unité de production d'air 4 en fonction du taux de $CO_2$ et/ou de COV. En ce sens, il est tout à fait envisageable de paramétrer un seuil critique de taux de $CO_2$ et/ou de COV à partir duquel le renouvellement de l'air de la pièce en question sera accéléré. Dans ce cas, le renouvellement de l'air est accéléré par une augmentation combinée de la vitesse de reprise d'air et de la vitesse de diffusion de l'unité de production d'air 4.

Selon une particularité de l'invention illustré à la figure 3, lorsqu'une pièce régulée P1, P2, P3, P4 atteint sa température de consigne $T_c$, le procédé de régulation thermique comporte une étape de déconnexion temporaire (g) du réseau de diffusion 5 de cette pièce régulée P1, P2, P3, P4 du bâtiment 1. En pratique, lorsque la température de consigne $T_c$ d'une pièce régulée P1, P2, P3, P4 est atteinte, le terminal de régulation 12 commande la déconnexion temporaire de ladite pièce régulée P1, P2, P3, P4 du réseau de diffusion 5. Cette déconnexion temporaire est effectuée au niveau du plénum de distribution 6.

Plus particulièrement, le piquage de diffusion 8 d'air, diffusant l'air depuis le plénum de distribution 6 vers ladite pièce régulée P1, P2, P3, P4, est fermé. En pratique, ce piquage de diffusion 8 d'air est fermé au travers de son volet qui passe de sa position ouverte à sa position fermée. Le volet est piloté par un servomoteur, lui-même, asservie au terminal de régulation 12.

Ainsi, il est possible que plusieurs pièces régulées P1, P2, P3, P4 soient simultanément déconnectées du réseau du réseau de diffusion 5 d'air. Dans ce cas, le besoin calorifique $C_t$ du bâtiment 1 est alors déterminé en excluant chaque pièce régulée P1, P2, P3, P4 ayant atteint sa température de consigne $T_c$.

Le calcul du besoin calorifique $C_t$ du bâtiment 1 se calcule comme exposé précédemment. Toutefois, le différentiel de température $\Delta T_m$ entre la température de consigne $T_c$ et la température mesurée $T_m$ à l'instant t doit être différent de zéro pour qu'une pièce régulée P1, P2, P3, P4 soit prise en compte dans le calcul du besoin calorifique $C_t$ du bâtiment 1.

Comme illustré à la figure 3, lorsque la température mesurée $T_m$ d'une pièce régulée P1, P2, P3, P4 qui est déconnectée du réseau de diffusion 5 diffère à nouveau de sa température de consigne $T_c$ et que le différentiel de température $\Delta T_m$ est supérieur à un seuil $\Delta T_{Seuil}$ déterminé, ladite pièce régulée P1, P2, P3, P4 est reconnectée au réseau de diffusion 5 du bâtiment 1. En parallèle, selon la règle exposée précédemment ladite pièce régulée P1, P2, P3, P4 est reconnectée au réseau de diffusion 5 est également réintégrée au calcul du besoin calorifique $C_t$ du bâtiment 1.

Ces opérations de connexion/déconnexion d'une pièce régulée P1, P2, P3, P4 en fonction de la valeur de son différentiel de température $\Delta T_m$ contribuent à réduire la consommation énergétique de l'unité de production d'air 4. Ces opérations de connexion/déconnexion assurent également à l'utilisateur un confort thermique de qualité en éliminant tout risque de surchauffe ou de refroidissement trop important d'une pièce régulée P1, P2, P3, P4.

Dans cet exemple, le seuil $\Delta T_{Seuil}$ de reconnexion d'une pièce régulée P1, P2, P3, P4 déconnectée peut être paramétré entre 0,1°C et 1°C, de préférence le seuil $\Delta T_{Seuil}$ est paramétré entre 0,2 °C et 0,5°C.

L'invention comporte une troisième variante de l'étape de détermination du besoin calorifique $C_t$ du bâtiment 1. Selon cette variante, l'étape de détermination d'un besoin calorifique $C_t$ du bâtiment correspond à une somme des besoins calorifiques $c_t$ à un instant t de chaque pièce régulée P1, P2, P3, P4.

Comme évoqué précédemment, selon l'invention une pièce régulée P1, P2, P3, P4 est alimentée en air spécifiquement via notamment un piquage de diffusion 8 d'air. En ce sens, il est possible de définir le besoin calorifique $c_t$ d'une pièce régulée P1, P2, P3, P4, par un degré d'ouverture ou un temps d'ouverture du piquage de diffusion 8 d'air alimentant ladite pièce régulée P1, P2, P3, P4. Le degré ou le temps d'ouverture du piquage de diffusion 8 est défini proportionnellement par rapport au différentiel $\Delta T_m$ de ladite pièce régulée P1, P2, P3, P4.

Il résulte de la proportionnalité de l'ouverture par rapport au différentiel $\Delta T_m$, une diffusion de l'air conditionné chaud et/ou de l'air conditionné froid, dans chaque pièce régulée P1, P2, P3, P4, de manière proportionnelle par rapport besoin calorifique $c_t$ respectif de chaque de pièce régulée P1, P2, P3, P4.

Avantageusement, la troisième variante de l'étape de détermination du besoin calorifique $C_t$ permet de réguler séparément la température de chaque pièce régulée P1, P2, P3, P4 selon une fonction proportionnelle intégrale dérivée ou PID.

Selon cette variante, il n'y a pas de seuil $\Delta T_{Seuil}$ pour ouvrir le piquage de diffusion 8 d'une pièce régulée P1, P2, P3, P4. En effet, la seule condition d'ouverture du piquage de diffusion 8 correspond au calcul d'un différentiel $\Delta T_m$ différent de zéro. Lorsque cette condition est remplie, le besoin calorifique $c_t$ de chaque pièce régulée P1, P2, P3, P4 est pris en compte dans le calcul du besoin calorifique $C_t$ du bâtiment 1, l'unité de production d'air 4 peut ainsi être solliciter plus finement.

Une telle régulation permet de faire osciller la température de la pièce régulée P1, P2, P3, P4 autour de sa température de consigne $T_c$. La sollicitation de l'unité de production d'air 4 est par conséquent moins saccadé. Il est à noter que pour opérer une telle régulation PID il est nécessaire d'utiliser une unité de production d'air de type « inverter » ou modulante. Ainsi, il possible d'augmenter le confort thermique de chaque pièce régulée P1, P2, P3, P4 sans pour autant augmenter la consommation énergique de l'unité de production d'air 4.

Comme cela est décrit précédemment, selon l'invention une pièce régulée P1, P2, P3, P4 est alimentée en air spécifiquement par un piquage de diffusion 8 d'air. Le piquage de diffusion 8 est ménagé au niveau du plénum de distribution 6.

Afin de contrôler la diffusion de l'air conditionné dans chaque pièce régulée P1, P2, P3, P4, le procédé contrôle, via le terminal de régulation 12, l'ouverture de chaque piquage de diffusion 8. A cet effet, le terminal de régulation 12 gère, au travers de servomoteurs, l'ouverture/fermeture d'un volet ménagé au sein d'un piquage de diffusion 8.

L'ouverture/fermeture des volets peut être gérée de plusieurs manières en fonction de l'équipement dont dispose l'installation de régulation 2.

Lorsque les volets, qui équipent le plénum, de diffusion 6 comportent un capteur de position, il est possible de faire prendre au volet de multiples positions entre sa position ouverte et sa position fermée. Le procédé contrôle le degré d'ouverture radial du volet en fonction notamment du différentiel $\Delta T_m$ de la pièce régulée P1, P2, P3, P4, correspondante. Le débit d'air qui alimente la pièce régulée P1, P2, P3, P4 est contrôlé par une réduction du diamètre du piquage de diffusion 8 par une position statique.

Lorsque les volets qui équipent le plénum de diffusion 6 ne possèdent pas de capteur de position, le temps d'ouverture et/ou de fermeture des volets est contrôlé en fonction, d'une part, du temps d'ouverture et/ou de fermeture nominal de chaque volet, et d'autre part, en fonction du différentiel $\Delta T_m$ de la pièce régulée P1, P2, P3, P4.

Selon cet exemple, le procédé contrôle le débit d'air diffusé dans une pièce régulée P1, P2, P3, P4 en jouant sur le temps d'ouverture du volet. Le volet n'est pas statique, en effet, le volet s'ouvre et se ferme selon une plage temporelle définie en fonction notamment du différentiel $\Delta T_m$ et son temps d'ouverture/fermeture nominal. Le débit d'air diffusé dans la pièce régulée P1, P2, P3, P4 est régulé au travers du comportement d'ouverture/fermeture dynamique du volet.

En pratique, dans le cadre d'une fonction PID, un différentiel $\Delta T_m$ d'une pièce régulée P1, P2, P3, P4 à un instant t est considéré comme une valeur d'erreur $E_n$ à un instant t qui est calculée comme suit :

$$E_n = T_c - \Delta_m$$

Cette valeur d'erreur $E_n$ est enregistrée et historisée dans un tableau à n entrées. Le tableau est paramétré par « durée de la fenêtre de cumul d'erreurs du PID.

La somme des erreurs contenues dans ce tableau est calculée en vue de déterminer l'angle d'ouverture $\theta_n$ du volet à un instant t d'une pièce régulée P1, P2, P3, P4.

L'angle d'ouverture $\theta$ nominal d'un volet est compris entre de 0 et 1. 0 correspond à la position fermée du volet et 1 correspond à la position ouverte. Dans ce contexte l'angle d'ouverture $\theta_n$ à un instant t peut être calculé comme suit :

$$\theta_n = (Kp * E_n) + (Ki * somme\_E_{n+n-x}) + (Kd * (E_n - E_{n-1}))$$

Avec :

Kp = coefficient proportionnel.
Ki= coefficient intégrale.
Kd= coefficient dérivée.

Les coefficients Kp, Ki et Kd peuvent être déterminés selon la méthode de Ziegler & Nichols.

La valeur de l'erreur $E_n$ à l'instant t est enregistrée dans une variable de l'erreur à $t_{n-1}$ pour le calcul suivant de l'angle d'ouverture $\theta_{n+1}$ à t+1.

En ce sens, il est possible de corriger le calcul de l'angle d'ouverture $\theta_n$ en fonction des précédentes entrées du tableau de valeur d'erreur. Ceci permet d'anticiper l'évolution de la température mesurée $T_m$ par rapport à la température de consigne $T_c$ mais aussi aux corrections précédentes. En ce sens, il est possible d'obtenir une faible oscillation de la température $T_m$ mesurée par le thermostat 3 autour de la température de consigne $T_c$. Ceci contribue au confort thermique et à la réduction de la consommation d'énergie.

Dans le cas de contrôle de l'ouverture temporel du volet, l'angle d'ouverture temporel est calculé en secondes comme suit :

$$T_\theta = \theta_m * \text{temps d'ouverture nominal du volet}$$

Le temps d'ouverture nominal du volet est un paramètre d'usine connu.

Le volet s'ouvre et se ferme alors en utilisant cette valeur de temps en fonction du temps actuel.

Le procédé de régulation thermique peut également comprendre un système de gestion des apports thermiques extérieurs. Ce système de gestion commande l'ouverture/fermeture automatique des ouvrants, c'est-à-dire, des volets du bâtiment 1. Le système de gestion peut également commander l'ouverture/fermeture de stores disposés en façade du bâtiment 1.

Le système de gestion peut être avantageusement piloté par le terminal de régulation 12. Le terminal de régulation 12 gère ainsi l'ouverture/fermeture des ouvrants et/ou des stores en fonction des apports thermiques extérieurs. A cet effet, des capteurs d'ensoleillement peuvent être installés en façade du bâtiment. Le terminal de régulation 12 peut ainsi réduire ou augmenter les apports thermiques extérieurs si l'est respectivement en mode froid ou un mode chaud. Ceci contribue à réduire le taux de sollicitation de l'unité de production d'air 4.

Il à noter que les trois variantes de détermination du besoin calorifique du bâtiment $C_t$ peut être utilisées pour réguler un bâtiment 1 à régulation multizone.

Néanmoins, la deuxième variante qui procure un plus grand confort thermique en asservissant notamment le taux de sollicitation de l'unité de production d'air 4 sur le différentiel maximal $\Delta T_{mMax}$ calculé par à l'ensemble des pièces régulées P1, P2, P3, P4 du bâtiment 1.

La troisième variante optimise le confort thermique de chaque pièce régulée P1, P2, P3, P4 au travers d'une régulation de type PID. De surcroît, cette variante sollicite plus finement l'unité de production d'air 4 et permet de réduire la consommation énergique de l'installation de régulation 2.

## Revendications

**1.** Procédé de régulation thermique chaud et/ou froid multizone d'un bâtiment (1), comportant :

a) une étape d'application d'une température de consigne $T_c$ définie dans une ou plusieurs pièces régulée(s) (P1, P2, P3, P4) thermiquement indépendante(s) du bâtiment (1) ;
b) une étape de calcul d'un différentiel $\Delta T_m$ de chaque pièce régulée (P1, P2, P3, P4), qui correspond à la différence entre la température de consigne $T_c$ et une température $T_m$ mesurée à un instant t ;
c) une étape de détermination d'un besoin calorifique $C_t$ du bâtiment (1) à un instant t, le besoin calorifique $C_t$ du bâtiment (1) étant déterminé en fonction du différentiel $\Delta T_m$ de chaque pièce régulée (P1, P2, P3, P4) ;
d) une étape d'ajustement du taux de sollicitation d'une unité de production d'air (4) au moins en fonction du besoin calorifique $C_t$ du bâtiment (1), de la température extérieure au bâtiment (1), et de la puissance de fonctionnement maximale de l'unité de production d'air (4), l'unité de production d'air (4) étant configurée pour produire et diffuser de l'air conditionné chaud et/ou de l'air conditionné froid à une température déterminée et selon un débit défini en fonction du besoin calorifique $C_t$ du bâtiment (1) ;
e) une étape de diffusion d'air conditionné selon la température déterminée et le débit défini en fonction du besoin calorifique $C_t$ du bâtiment (1), l'air conditionné étant diffusé dans un réseau de diffusion (5) qui alimente indépendamment chaque pièce régulée (P1, P2, P3, P4) du bâtiment (1) ; et
f) une étape de régulation thermique de chaque pièce régulée (P1, P2, P3, P4) par la répétition à intervalle régulier des étapes b), c), d) et e), le taux de sollicitation de l'unité de production d'air (4) étant ajusté en fonction de l'évolution du besoin calorifique Ct du bâtiment (1).

**2.** Procédé selon la revendication 1, **caractérisé en ce que** l'étape de détermination d'un besoin calorifique $C_t$ du bâtiment (1) correspond à une sélection d'un différentiel maximal $\Delta T_{mMax}$ parmi les différentiels $\Delta T_m$ de chaque pièce régulée (P1, P2, P3, P4) du bâtiment (1).

**3.** Procédé selon la revendication 1, **caractérisé en ce que**, dans l'étape c), le besoin calorifique $C_t$ du bâtiment (1) correspond à une moyenne des différentiels $\Delta T_m$ de chaque pièce régulée (P1, P2, P3, P4) du bâtiment (1).

**4.** Procédé selon la revendication 1, **caractérisé en ce que**, l'étape de détermination d'un besoin calorifique $C_t$ du bâtiment (1) correspond à une somme des besoins calorifiques $c_t$ à un instant t de chaque pièce régulée (P1, P2, P3, P4), le besoin calorifique $c_t$ d'une pièce régulée (P1, P2, P3, P4) étant défini en fonction du différentiel $\Delta T_m$ de ladite pièce régulée (P1, P2, P3, P4).

**5.** Procédé de régulation thermique selon l'une des revendications 1 à 4, **caractérisé en ce que**, lorsque la température de consigne Tc est atteinte pour une ou plusieurs pièce(s) régulée(s) (P1, P2, P3, P4) déterminée(s), le procédé de régulation thermique comporte une étape de déconnexion temporaire du réseau de diffusion (5) de chaque pièce régulée (P1, P2, P3, P4) du bâtiment (1) ayant atteint sa température de consigne Tc, le besoin calorifique Ct étant alors déterminé en excluant chaque pièce régulée (P1, P2, P3, P4) ayant atteint sa température de consigne Tc.

**6.** Procédé de régulation thermique selon la revendication 5, **caractérisé en ce que** lorsque la température mesurée Tm, d'une pièce régulée (P1, P2, P3, P4) qui est déconnectée du réseau de diffusion (5), diffère à nouveau de sa température de consigne Tc, et que le différentiel de température $\Delta Tm$ est supérieur à un seuil $\Delta T_{Seuil}$ déterminé, la pièce régulée (P1, P2, P3, P4) est reconnectée au réseau de diffusion (5) du bâtiment (1).

**7.** Procédé de régulation thermique selon la revendication 6, **caractérisé en ce que** le seuil $\Delta T_{Seuil}$ est paramétré entre 0,1°C et 1°C, de préférence le seuil $\Delta T_{Seuil}$ est paramétré entre 0,2 °C et 0,5°C, de préférence le seuil $\Delta T_{Seuil}$ est paramétré à 0,3°C.

**8.** Procédé de régulation selon la revendication 4, **caractérisé en ce que**, l'air conditionné chaud et/ou l'air conditionné froid est diffusé dans chaque pièce régulée (P1, P2, P3, P4) de manière proportionnelle par rapport besoin calorifique $c_t$ respectif de chaque de pièce régulée (P1, P2, P3, P4).

**9.** Procédé de régulation selon la revendication 8, **caractérisé en ce que**, une pièce régulée (P1, P2, P3, P4) est alimentée en air spécifiquement par un piquage de diffusion (8) d'air, le besoin calorifique $c_t$ correspondant à un degré d'ouverture ou un temps d'ouverture du piquage de diffusion (8) d'air d'une pièce régulée (P1, P2, P3, P4), le degré ou le temps d'ouverture du piquage de diffusion étant proportionnel au différentiel $\Delta T_m$ de cette pièce régulée (P1, P2, P3, P4).

**10.** Procédé de régulation thermique selon l'une des revendications 1 à 9, **caractérisé en ce que** l'étape d'ajustement du taux de sollicitation de l'unité de production d'air (4) est fonction de la température de reprise d'air par un réseau de reprise d'air du bâtiment (1).

**11.** Procédé de régulation thermique selon l'une des revendications 1 à 10, **caractérisé en ce que** l'étape d'ajustement du taux de sollicitation de l'unité de production d'air (4) est répétée de façon continue.

**12.** Procédé de régulation thermique selon l'une des revendications 1 à 11, **caractérisé en ce qu'**il comporte une étape de détection de présence dans chaque pièce régulée (P1, P2, P3, P4) connectée au ou déconnectée du réseau de diffusion (5), lorsqu'une présence est détectée dans une pièce régulée (P1, P2, P3, P4), ladite pièce régulée (P1, P2, P3, P4) est connectée au réseau de diffusion (5) et prise en compte dans la détermination du besoin calorifique $C_t$ du bâtiment (1).

**13.** Procédé de régulation thermique selon l'une des revendications 1 à 12, **caractérisé en ce qu'**il comporte une étape de détection dans chaque pièce régulée (P1, P2, P3, P4) de l'ouverture d'une huisserie, lorsque l'ouverture d'une huisserie est détectée dans une pièce régulée (P1, P2, P3, P4), la régulation thermique de ladite pièce régulée (P1, P2, P3, P4) est stoppée jusqu'à la fermeture de l'huisserie.

**14.** Procédé de régulation thermique selon l'une des revendications 1 à 13, **caractérisé en ce que** l'étape d'application d'une température de consigne Tc pour chaque pièce régulée (P1, P2, P3, P4) est effectuée via un terminal présent dans chaque pièce régulée (P1, P2, P3, P4) et/ou via un terminal distant commandant au travers d'un réseau de télécommunication (11) la température de consigne Tc de chaque pièce régulée (P1, P2, P3, P4).

**15.** Procédé de régulation thermique selon l'une des revendications 1 à 14, **caractérisé en ce qu'**il comprend une commande d'ouverture/fermeture automatique d'ouvrants et/ou de stores en fonction des apports thermiques extérieurs.

**16.** Installation de régulation (2) thermique d'un bâtiment (1) pour la mise en oeuvre d'un procédé de régulation thermique selon l'une des revendications 1 à 15, l'installation de régulation (2) comprenant une ou plusieurs pièce(s) à réguler (P1, P2, P3, P4), l'installation de régulation comprenant :

- un thermostat (3) qui est installé dans chaque pièce régulée (P1, P2, P3, P4), le thermostat (3) comportant au moins un capteur de température et des moyens de gestion de la température de la pièce régulée (P1, P2, P3, P4) ;
- au moins une unité de production d'air (4) équipée d'un ventilateur et d'un compresseur configurés pour produire et diffuser de l'air conditionné chaud et/ou de l'air conditionné froid à une température déterminée et un débit défini ;
- un réseau de diffusion (5) d'air qui est alimenté par l'unité de production d'air (4) et un réseau de reprise d'air favorisant le renouvellement de l'air dans chaque pièce régulée (P1, P2, P3, P4) du bâtiment (1) ;
- au moins un capteur de température disposé sur le pourtour extérieur du bâtiment (1) ;
- au moins un plénum de distribution (6) d'air qui est intégré au réseau de diffusion (5), le plénum de distribution (6) d'air, d'une part, étant relié à chaque pièce régulée (P1, P2, P3, P4) au travers d'au moins un conduit de diffusion (7), et d'autre part, le plénum de distribution (6) comportant des moyens de gestion de la diffusion indépendante de l'air conditionné dans chaque conduit de diffusion (7) ; et
- une unité de contrôle (10) de l'installation de régulation (2) qui est reliée à chaque thermostat (3), au(x) capteur(s) de température disposé(s) sur le pourtour extérieur du bâtiment (1), à l'unité de production d'air (4) et aux moyens de gestion du plénum de distribution (6), l'unité de contrôle (10) permettant d'ajuster le fonctionnement de l'unité de production d'air (4) et de gérer indépendamment la température de chaque pièce régulée (P1, P2, P3, P4) selon le procédé de l'une des revendications 1 à 15.

17. Installation de régulation (2) thermique selon la revendication 16,
**caractérisée en ce qu'**elle comporte un terminal de régulation (12) qui pilote l'unité de contrôle (10) en fonction au moins des données fournies par chaque thermostat (3) .

18. Installation de régulation (2) thermique selon la revendication 17,
**caractérisée en ce qu'**elle comporte un module de traduction (13) des protocoles de fonctionnement entre l'unité de contrôle (10) de l'installation de régulation (2) et l'unité de production d'air (4).]


**Patentansprüche**

1. Verfahren zur heißen und/oder kalten thermischen Multizonenregelung eines Gebäudes (1), umfassend:

a) einen Schritt zum Anwenden einer Solltemperatur Tc, die in einem oder mehreren regulierten Räumen (P1, P2, P3, P4) definiert ist, die thermisch unabhängig vom Gebäude (1) sind;
b) einen Schritt zum Berechnen einer Differenz $\Delta T_m$ jedes regulierten Raums (P1, P2, P3, P4), die der Differenz zwischen der Solltemperatur Tc und einer zu einem Zeitpunkt t gemessenen Temperatur $T_m$ entspricht;
c) einen Schritt zum Bestimmen eines Wärmebedarfs Ct des Gebäudes (1) zu einem Zeitpunkt t, wobei der Wärmebedarf Ct des Gebäudes (1) in Abhängigkeit von der Differenz $\Delta T_m$ jedes regulierten Raums (P1, P2, P3, P4) bestimmt wird;
d) einen Schritt zum Anpassen der Bedarfsrate einer Lufterzeugungseinheit (4) zumindest in Abhängigkeit des Wärmebedarfs Ct des Gebäudes (1), der Temperatur außerhalb des Gebäudes (1) und der maximalen Betriebsleistung der Lufterzeugungseinheit (4), wobei die Lufterzeugungseinheit (4) konfiguriert ist, um heiße klimatisierte Luft und/oder kalte klimatisierte Luft mit einer bestimmten Temperatur und entsprechend einer Durchflussrate, die entsprechend dem Wärmebedarf Ct des Gebäudes (1) definiert ist, zu erzeugen und zu verteilen;
e) einen Schritt zum Verteilen der klimatisierten Luft entsprechend der bestimmten Temperatur und der in Abhängigkeit von dem Wärmebedarf Ct des Gebäudes (1) definierten Durchflussrate, wobei die klimatisierte Luft in einem Verteilungsnetz (5) verteilt wird, das jeden regulierten Raum (P1, P2, P3, P4) des Gebäudes (1) unabhängig versorgt; und
f) einen Schritt zum thermischen Regulieren jedes regulierten Raums (P1, P2, P3, P4) durch Wiederholen der Schritte b), c), d) und e) in regelmäßigen Abständen, wobei die Bedarfsrate der Lufterzeugungseinheit (4) entsprechend der Entwicklung des Wärmebedarfs Ct des Gebäudes (1) angepasst wird.

2. Verfahren nach Anspruch 1, **dadurch gekennzeichnet, dass** der Schritt zum Bestimmen eines Wärmebedarfs Ct des Gebäudes (1) einer Auswahl einer maximalen Differenz $\Delta T_{mMax}$ aus den Differenzen $\Delta T_m$ jedes regulierten

Raums (P1, P2, P3, P4) des Gebäudes (1) entspricht.

3. Verfahren nach Anspruch 1, **dadurch gekennzeichnet, dass** beim Schritt zum Bestimmen der Wärmebedarf $C_t$ des Gebäudes (1) einem Mittel der Differenzen $\Delta T_m$ jedes regulierten Raums (P1, P2, P3, P4) des Gebäudes (1) entspricht.

4. Verfahren nach Anspruch 1, **dadurch gekennzeichnet, dass** der Schritt zum Ermitteln eines Wärmebedarfs $C_t$ des Gebäudes (1) einer Summe des Wärmebedarfs $C_t$ zu einem Zeitpunkt t jedes regulierten Raums (P1, P2, P3, P4) entspricht, wobei der Wärmebedarf $C_t$ eines regulierten Raums (P1, P2, P3, P4) in Abhängigkeit von der Differenz $\Delta T_m$ des regulierten Raums (P1, P2, P3, P4) definiert wird.

5. Verfahren zur thermischen Regelung nach einem der Ansprüche 1 bis 4, **dadurch gekennzeichnet, dass** bei Erreichen der Solltemperatur Tc für einen oder mehrere regulierte Räume (P1, P2, P3, P4) das Verfahren zur thermischen Regelung einen Schritt zum vorübergehenden Trennen des Verteilungsnetzes (5) jedes regulierten Raums (P1, P2, P3, P4) des Gebäudes (1) umfasst, nachdem er seine Solltemperatur Tc erreicht hat, wobei dann der Wärmebedarf $C_t$ durch Ausschluss jedes regulierten Raums (P1, P2, P3, P4), der seine Solltemperatur Tc erreicht hat, bestimmt wird.

6. Verfahren zur thermischen Regelung nach Anspruch 5,
**dadurch gekennzeichnet, dass,** wenn die gemessene Temperatur Tm eines regulierten Raums (P1, P2, P3, P4), der vom Verteilungsnetz (5) getrennt ist, wieder von seinem Temperatursollwert Tc abweicht, und wenn die Temperaturdifferenz $\Delta Tm$ größer als ein bestimmter Schwellenwert $\Delta Tseun$ ist, der regulierte Raum (PI, P2, P3, P4) wieder an das Verteilungsnetz (5) des Gebäudes (1) angeschlossen wird.

7. Verfahren zur thermischen Regelung nach Anspruch 6,
**dadurch gekennzeichnet, dass** der Schwellenwert $\Delta T_{Seuil}$ zwischen 0,1 °C und 1 °C eingestellt wird, vorzugsweise der Schwellenwert $\Delta Tseun$ zwischen 0,2 °C und 0,5 °C eingestellt wird, vorzugsweise der Schwellenwert $\Delta T_{Seuil}$ auf 0,3 °C eingestellt wird.

8. Verfahren zur Regelung nach Anspruch 4, **dadurch gekennzeichnet, dass** die warme klimatisierte Luft und/oder die kalte klimatisierte Luft in jedem regulierten Raum (P1, P2, P3, P4) proportional zum jeweiligen Wärmebedarf jedes regulierten Raums verteilt wird (P1, P2, P3, P4).

9. Verfahren zur Regelung nach Anspruch 8, **dadurch gekennzeichnet, dass** ein regulierter Raum (P1, P2, P3, P4) durch eine Luftverteilungsabzweigung (8) gezielt mit Luft versorgt wird, wobei der Wärmebedarf $c_t$ einem Öffnungsgrad oder einer Öffnungszeit der Luftverteilungsdüse (8) eines regulierten Raums (P1, P2, P3, P4) entspricht, wobei der Grad oder die Öffnungszeit der Verteilungsabzweigung proportional zur Differenz $\Delta T_m$ dieses regulierten Raums (P1, P2, P3, P4) ist.

10. Verfahren zur thermischen Regelung nach einem der Ansprüche 1 bis 9, **dadurch gekennzeichnet, dass** der Schritt zum Einstellen der Belastungsrate der Lufterzeugungseinheit (4) in Abhängigkeit von der Lufteinlasstemperatur durch ein Lufteinlassnetz des Gebäudes (1) ist.

11. Verfahren zur thermischen Regelung nach einem der Ansprüche 1 bis 10, **dadurch gekennzeichnet, dass** der Schritt zum Einstellen der Belastungsrate der Lufterzeugungseinheit (4) ohne Unterbrechung wiederholt wird.

12. Verfahren zur thermischen Regelung nach einem der Ansprüche 1 bis 11, **dadurch gekennzeichnet, dass** es einen Schritt zum Erkennen der Anwesenheit in jedem regulierten Raum (P1, P2, P3, P4) umfasst, der mit dem Verteilungsnetz (5) verbunden oder davon getrennt ist, wenn eine Anwesenheit in einem regulierten Raum (P1, P2, P3, P4) erkannt wird, dieser regulierte Raum (P1, P2, P3, P4) an das Verteilungsnetz (5) angeschlossen und bei der Bestimmung des $C_t$ des Gebäudes (1) berücksichtigt wird.

13. Verfahren zur thermischen Regelung nach einem der Ansprüche 1 bis 12, **dadurch gekennzeichnet, dass** es einen Schritt zum Erfassen der Öffnung einer Türeinfassung in jedem regulierten Raum (P1, P2, P3, P4) umfasst, wenn das Öffnen einer Türeinfassung in einem regulierten Raum (P1, P2, P3, P4) erfasst wird, wobei die thermische Regelung des regulierten Raums (P1, P2, P3, P4) gestoppt wird, bis die Türeinfassung geschlossen wird.

14. Verfahren zur thermischen Regelung nach einem der Ansprüche 1 bis 13, **dadurch gekennzeichnet, dass** der Schritt zum Anwenden einer Solltemperatur Tc für jeden regulierten Raum (P1, P2, P3, P4) über ein in jedem regulierten Raum (P1, P2, P3, P4) vorhandenes Terminal und/oder über ein Fernterminal ausgeführt wird, das durch ein Telekommunikationsnetzwerk (11) die Solltemperatur Tc jedes regulierten Raums (P1, P2, P3, P4) steuert.

15. Verfahren zur thermischen Regelung nach einem der Ansprüche 1 bis 14, **dadurch gekennzeichnet, dass** es eine automatische Öffnungs-/Schließsteuerung von Öffnungen und/oder Jalousien in Abhängigkeit von externen Wärmeeinflüssen umfasst.

16. Anlage (2) zur thermischen Regelung eines Gebäudes (1) zur Implementierung eines Verfahrens zur thermischen Regelung nach einem der Ansprüche 1 bis 15, wobei die Anlage (2) zur Regelung ein oder mehrere zu regulierende Räume (P1, P2, P3, P4) umfasst, wobei die Anlage zur Regelung Folgendes umfasst:

- einen Thermostat (3), der in jedem regulierten Raum (P1, P2, P3, P4) installiert ist, wobei der Thermostat (3) mindestens einen Temperatursensor und Mittel zur Verwaltung der Temperatur des regulierten Raums (P1, P2, P3, P4) umfasst;
- mindestens eine Lufterzeugungseinheit (4), die mit einem Ventilator und einem Kompressor ausgestattet ist und konfiguriert ist, um heiße klimatisierte Luft und/oder kalte klimatisierte Luft mit einer bestimmten Temperatur und einer definierten Durchflussrate zu erzeugen und zu verteilen;
- ein Luftverteilungsnetz (5), das von der Lufterzeugungseinheit (4) versorgt wird, und ein Lufteinlassnetz, das die Erneuerung der Luft in jedem regulierten Raum (P1, P2, P3, P4) des Gebäudes (1) fördert;
- mindestens einen am Außenumfang des Gebäudes (1) angeordneten Temperatursensor;
- mindestens ein Luftverteilungsplenum (6), das in das Verteilungsnetz (5) integriert ist, wobei das Luftverteilungsplenum (6) einerseits mit jedem regulierten Raum (P1, P2, P3, P4) durch mindestens einen Verteilungskanal (7) verbunden ist, und andererseits das Verteilungsplenum (6) Mittel zur Verwaltung der unabhängigen Verteilung klimatisierter Luft in jedem Verteilungskanal (7) umfasst; und
- eine Steuerungseinheit (10) der Anlage (2) zur Regelung, die mit jedem Thermostat (3), mit dem/den am Außenumfang des Gebäudes (1) angeordneten Temperatursensor(en), der Lufterzeugungseinheit (4) und den Mitteln zur Verwaltung des Verteilungsplenums (6) verbunden ist, wobei die Steuerungseinheit (10) es ermöglicht, den Betrieb der Lufterzeugungseinheit (4) anzupassen und die Temperatur jedes regulierten Raums (P1, P2, P3, P4) unabhängig nach dem Verfahren nach einem der Ansprüche 1 bis 15 zu verwalten.

17. Anlage (2) zur thermischen Regelung nach Anspruch 16,
**dadurch gekennzeichnet, dass** sie einen Regelungsterminal (12) umfasst, der die Steuerungseinheit (10) in Abhängigkeit von mindestens den von jedem Thermostat (3) gelieferten Daten steuert.

18. Anlage (2) zur thermischen Regelung nach Anspruch 17,
**dadurch gekennzeichnet, dass** sie ein Übersetzungsmodul (13) der Betriebsprotokolle zwischen der Steuerungseinheit (10) der Anlage (2) zur Regelung und der Lufterzeugungseinheit (4) umfasst.

**Claims**

1. Multi-zone hot and/or cold thermal regulation method for a building (1), comprising:

a) a step of applying a setpoint temperature $T_c$ defined in one or more thermally independent regulated room(s) (P1, P2, P3, P4) of the building (1);
b) a step of calculating a differential $\Delta T_m$ of each regulated room (P1, P2, P3, P4), which corresponds to the difference between the setpoint temperature $T_c$ and a temperature $T_m$ measured at an instant t;
c) a step of determining a heating requirement $C_t$ of the building (1) at an instant t, the heating requirement $C_t$ of the building (1) being determined on the basis of the differential $\Delta T_m$ of each regulated room (P1, P2, P3, P4);
d) a step of adjusting the level of demand of an air production unit (4) at least on the basis of the heating requirement $C_t$ of the building (1), the outside temperature of the building (1) and the maximum operating power of the air production unit (4), the air production unit (4) being designed to produce and diffuse hot conditioned air and/or cold conditioned air at a determined temperature and according to a flow rate defined on the basis of the heating requirement $C_t$ of the building (1);
e) a step of diffusing conditioned air according to the determined temperature and the flow rate defined on the basis of the heating requirement $C_t$ of the building (1), the conditioned air being diffused in a diffusion network (5) which independently supplies each regulated room (P1, P2, P3, P4) of the building (1); and

f) a step of thermally regulating each regulated room (P1, P2, P3, P4) by the repetition, at regular intervals, of steps b), c), d) and e), the level of demand of the air production unit (4) being adjusted on the basis of the development of the heating requirement $C_t$ of the building (1).

2. Method according to claim 1, **characterized in that** the step of determining a heating requirement $C_t$ of the building (1) corresponds to a selection of a maximum differential $\Delta T_{mMax}$ from among the differentials $\Delta T_m$ of each regulated room (P1, P2, P3, P4) of the building (1).

3. Method according to claim 1, **characterized in that,** in step c), the heating requirement $C_t$ of the building (1) corresponds to an average of the differentials $\Delta T_m$ of each regulated room (P1, P2, P3, P4) of the building (1).

4. Method according to claim 1, **characterized in that** the step of determining a heating requirement $C_t$ of the building (1) corresponds to a sum of the heating requirements $C_t$ at an instant t of each regulated room (P1, P2, P3, P4), the heating requirement $c_t$ of a regulated room (P1, P2, P3, P4) being defined on the basis of the differential $\Delta T_m$ of said regulated room (P1, P2, P3, P4).

5. Thermal regulation method according to any of claims 1 to 4,
**characterized in that,** when the setpoint temperature Tc is reached for one or more determined regulated room(s) (P1, P2, P3, P4), the thermal regulation method comprises a step of temporarily disconnecting the diffusion network (5) from each regulated room (P1, P2, P3, P4) of the building (1) that has reached its setpoint temperature Tc, the heating requirement $C_t$ then being determined by excluding each regulated room (P1, P2, P3, P4) that has reached its setpoint temperature Tc.

6. Thermal regulation method according to claim 5, **characterized in that,** when the measured temperature Tm of a regulated room (P1, P2, P3, P4) which is disconnected from the diffusion network (5) again differs from its setpoint temperature Tc, and when the temperature differential $\Delta T_m$ is above a determined threshold $\Delta T_{Seuil}$, the regulated room (P1, P2, P3, P4) is reconnected to the diffusion network (5) of the building (1).

7. Thermal regulation method according to claim 6, **characterized in that** the threshold $\Delta T_{seun}$ is set between 0.1 °C and 1°C, preferably the threshold $\Delta T_{seun}$ is set between 0.2°C and 0.5°C, more preferably the threshold $\Delta T_{Seuil}$ is set to 0.3°C.

8. Regulation method according to claim 4, **characterized in that** the hot conditioned air and/or the cold conditioned air is diffused in each regulated room (P1, P2, P3, P4) proportionally with respect to the heating requirement $c_t$ of each regulated room (P1, P2, P3, P4).

9. Regulation method according to claim 8, **characterized in that** a regulated room (P1, P2, P3, P4) is supplied with air specifically by an air diffusion tap (8), the heating requirement $c_t$ corresponding to an opening degree or an opening time of the air diffusion tap (8) of a regulated room (P1, P2, P3, P4), the opening degree or time of the diffusion tap being proportional to the differential $\Delta T_m$ of this regulated room (P1, P2, P3, P4).

10. Thermal regulation method according to any of claims 1 to 9, **characterized in that** the step of adjusting the level of demand of the air production unit (4) is based on the temperature of air recovered by an air recovery network of the building (1).

11. Thermal regulation method according to any of claims 1 to 10, **characterized in that** the step of adjusting the level of demand of the air production unit (4) is repeated continuously.

12. Thermal regulation method according to any of claims 1 to 11,
**characterized in that** it comprises a step of presence detection in each regulated room (P1, P2, P3, P4) connected to or disconnected from the diffusion network (5), when a presence is detected in a regulated room (P1, P2, P3, P4) said regulated room (P1, P2, P3, P4) being connected to the diffusion network (5) and taken into account in the determination of the heating requirement $C_t$ of the building (1).

13. Thermal regulation method according to any of claims 1 to 12,
**characterized in that** it comprises a step of detecting in each regulated room (P1, P2, P3, P4,) the opening of a door frame, when the opening of a door frame is detected in a regulated room (P1, P2, P3, P4) the thermal regulation of said regulated room (P1, P2, P3, P4) being stopped until the door frame is closed.

14. Thermal regulation method according to any of claims 1 to 13,
**characterized in that** the step of applying a setpoint temperature Tc to each regulated room (P1, P2, P3, P4) is carried out via a terminal which is present in each regulated room (P1, P2, P3, P4), and/or via a remote terminal which controls, via a telecommunications network (11), the setpoint temperature Tc of each regulated room (P1, P2, P3, P4).

15. Thermal regulation method according to any of claims 1 to 14, **characterized in that** it comprises an automatic open/close command for opening panels and/or blinds on the basis of external thermal inputs.

16. Thermal regulation installation (2) for a building (1), for implementing a thermal regulation method according to any of claims 1 to 15, the regulation installation (2) comprising one or more rooms to be regulated (P1, P2, P3, P4), the regulation installation comprising:

   - a thermostat (3) which is installed in each regulated part (P1, P2, P3, P4), the thermostat (3) comprising at least one temperature sensor and means for managing the temperature of the regulated part (P1, P2, P3, P4);
   - at least one air production unit (4) provided with a fan and a compressor which are designed to produce and diffuse hot conditioned air and/or cold conditioned air at a determined temperature and a defined flow rate;
   - an air diffusion network (5) which is supplied by the air production unit (4) and an air recovery network which promotes recycling of the air in each regulated room (P1, P2, P3, P4) of the building (1);
   - at least one temperature sensor arranged on the external perimeter of the building (1);
   - at least one air distribution plenum (6) which is integrated into the diffusion network (5), the air distribution plenum (6) being connected to each regulated room (P1, P2, P3, P4) via at least one diffusion duct (7), and the distribution plenum (6) comprising means for managing the independent diffusion of the conditioned air in each diffusion duct (7); and
   - a unit (10) for controlling the regulation installation (2), which is connected to each thermostat (3), to the temperature sensor(s) arranged on the external perimeter of the building (1), to the air production unit (4) and to the means for managing the distribution plenum (6), the control unit (10) enabling the operation of the air production unit (4) to be adjusted and the temperature of each regulated room (P1, P2, P3, P4) to be independently managed according to the method of any of claims 1 to 15.

17. Thermal regulation installation (2) according to claim 16,
**characterized in that** it comprises a regulation terminal (12) which operates the control unit (10) on the basis of at least the data supplied by each thermostat (3).

18. Thermal regulation installation (2) according to claim 17,
**characterized in that** it comprises a module (13) for translating the operating protocols between the control unit (10) of the regulation installation (2) and the air production unit (4).

[Fig. 1]

Fig. 1

[Fig. 2]

Fig. 2

EP 3 969 820 B1

[Fig. 3]

# Fig. 3

Application d'une température de
consigne $T_c$ d'une pièce déterminée

Mesure de la température à un instant $T_t$
de la pièce déterminée

Détermination d'un différentiel de
température$\Delta T_t$ entre la température de
consigne $T_c$ et la température mesurée à
l'instant T

Si$\Delta T_t \neq 0$ et supérieure à
$\Delta T_{seuil}$ — Si non

La pièce déterminée est
connectée à l'unité de production d'air

Si la pièce déterminée était
connecté à l'unité de production d'air — Si non

Commander au moins un paramètre de
fonctionnement de l'unité
de production d'air en
fonction du différentiel de température $\Delta T_t$

La pièce déterminée est
déconnectée de l'unité de production d'air

Diffusion d'air à une température définie
dans la pièce déterminée

20

[Fig. 4]

Fig. 4

[Fig. 5]

Fig. 5

[Fig. 6]

Fig. 6

[Fig. 7]

Fig. 7

EP 3 969 820 B1

[Fig. 8]

Fig. 8

[Fig. 9]

Fig. 9

23

**EP 3 969 820 B1**

## RÉFÉRENCES CITÉES DANS LA DESCRIPTION

**Documents brevets cités dans la description**

- AU 2002301200 A1